# DEMANDE DE BREVET EUROPEEN

(11) **EP 2 278 371 A2**
(43) Date de publication de la demande: **26.01.2011**
(21) Numéro de dépôt: 10168686.3
(22) Date de dépôt: 07.07.2010
(51) Int. Cl.: G02B 6/44

(54) **Boîtier d'interconnexion pour fibre optique**

(30) Priorité: 22.07.2009 FR 0955101
(71) Demandeur: Nexans, 75008 Paris (FR)
(72) Inventeur: Apere, Rodolphe, 78570, ANDRESY (FR); Renard, Xavier, 78410, AUBERGENVILLE (FR)
(74) Mandataire: Gauer, Pierre

(57) **Abrégé**

Boîtier d'interconnexion pour fibre optique apte à accueillir au moins une épissure (16, 17), rectiligne et allongée, comportant une première extrémité (19) solidaire et alignée avec une première fibre optique (14) issue d'une première pluralité (13) de fibres optiques, regroupées et protégées par un câble principal (12) via lequel ladite première fibre optique entre dans ledit boîtier d'interconnexion (15) et une seconde extrémité (20) solidaire et alignée avec une seconde fibre optique issue d'une seconde pluralité de fibres optiques individuellement protégées chacune par un câble secondaire via lequel ladite seconde fibre optique sort dudit boîtier d'interconnexion (15), ***caractérisé en ce que*** ladite épissure (16, 17) est disposée dans un plan parallèle à un plan de référence contenant le câble principal (12), et positionnée relativement au boîtier d'interconnexion (15) de telle manière à ce qu'une portion de fibre optique de longueur égale à un rayon de courbure minimal de ladite fibre optique mesurée à partir de la seconde extrémité (20) soit au moins partiellement positionnée à l'extérieur du boîtier d'interconnexion (15).

## Description

La présente invention concerne un boîtier d'interconnexion pour fibre optique, apte à loger au moins une épissure reliant une première fibre optique issue d'un câble principal d'entrée dans le boîtier d'interconnexion et une seconde fibre optique individuellement protégée par un câble secondaire de sortie. Un tel boîtier d'interconnexion peut être utilisé pour la distribution résidentielle d'un réseau optique au niveau d'un étage d'un habitat collectif, le câble principal arrivant d'un concentrateur, tandis que le câble secondaire dessert un logement. Une fibre optique nue présente typiquement un diamètre de l'ordre de 900 microns. Le raccordement de la fibre optique entre le câble principal et le câble secondaire est réalisé au moyen d'une épissure. Une épissure permet par fusion de la silice de réaliser un raccordement entre deux fibres optiques. Au contraire de la fibre optique qui présente une certaine souplesse et autorise un diamètre de courbure minimal, une épissure est rigide et rectiligne. Elle est classiquement protégée par une protection d'épissure sensiblement cylindrique et allongée selon la direction de la fibre optique. La protection d'épissure présente une longueur typique de 40 mm.

L'objet d'un boîtier d'interconnexion est de permettre de réaliser par épissure les liaisons entre les différentes fibres optiques présentes, de protéger ces fibres optiques généralement laissées nues entre le câble principal et les épissures, d'immobiliser le câble principal, ainsi que les épissures et/ou les câbles secondaires. Un boîtier d'interconnexion est typiquement logé dans un boîtier encastré pré-existant duquel arrivent et repartent des gaines annelées accueillant le câble principal et les câbles secondaires.

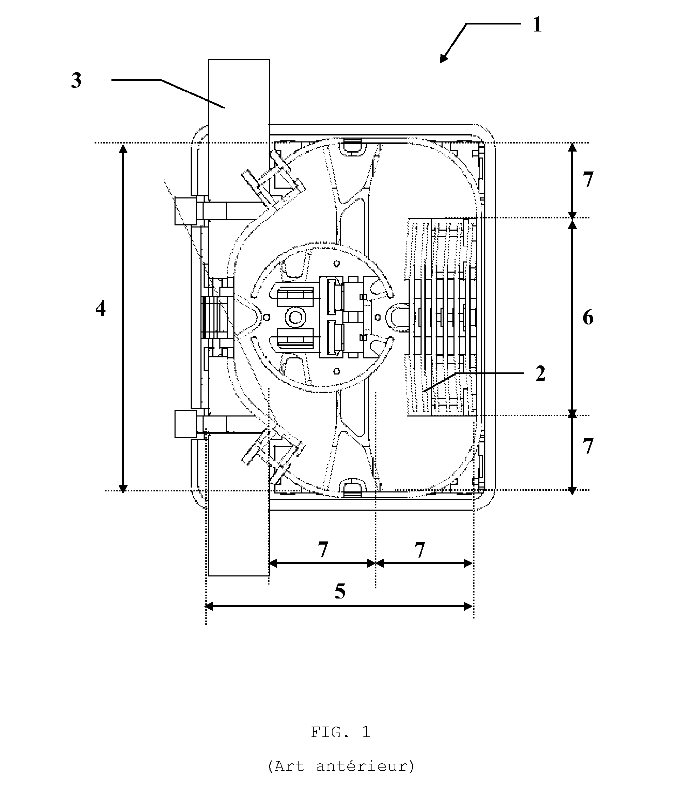

Il est connu de réaliser l'interconnexion des fibres optiques au sein d'une cassette qui, dans toutes les réalisations existantes, enveloppent complètement tant les fibres optiques, que les épissures et les extrémités du câble principal et des câbles secondaires. Un exemple d'une telle cassette 1 est montré à la figure 1. Le câble principal 3 est vertical sur la gauche de la figure. Du fait d'un préjugé d'obligation d'intégration complète de l'épissure 2 dans la cassette 1, cette dernière présente une grande dimension 4 intérieure au moins égale à la longueur de l'épissure 6 ajoutée à deux fois le rayon minimal de courbure 7 de la fibre optique, une fois en entrée et une fois en sortie de l'épissure 2 et une petite dimension intérieure 5 au moins égale à deux fois le rayon minimal de courbure 7 de la fibre optique, auxquelles ils convient d'ajouter au minimum une épaisseur de matière de la cassette 1. En considérant, à titre illustratif et indicatif des équipements et technologies actuellement disponibles, une épissure de longueur 40 mm et un rayon minimal de courbure de 15 mm cela conduit à une cassette d'au moins 70 x 30 mm. La cassette de la figure 1 présente ainsi des dimensions hors tout de 82 x 65 mm.

Il a été souhaité d'intégrer une interconnexion de fibre optique dans un boîtier encastré présentant des dimensions intérieures de 85 x 85 mm. Compte tenu d'une marge interstitielle nécessaire pour diriger les câbles secondaires vers les gaines annelées, il n'est pas possible d'employer une cassette semblable à celle de la figure 1. Un boîtier d'interconnexion de dimensions nettement réduites est fortement souhaitable.

La présente invention permet, toutes choses étant égales par ailleurs, de réaliser un boîtier d'interconnexion de 52 x 52 mm ou encore de 43 x 52 mm, parfaitement intégrable dans un boîtier encastré de 85 x 85 mm.

L'invention concerne un boîtier d'interconnexion pour fibre optique apte à accueillir au moins une épissure rectiligne et allongée, comportant une première extrémité solidaire et alignée avec une première fibre optique issue d'une première pluralité de fibres optiques, regroupées et protégées par un câble principal via lequel ladite première fibre optique entre dans ledit boîtier d'interconnexion et une seconde extrémité solidaire et alignée avec une seconde fibre optique issue d'une seconde pluralité de fibres optiques individuellement protégées chacune par un câble secondaire via lequel ladite seconde fibre optique sort dudit boîtier d'interconnexion, ladite épissure étant disposée dans un plan parallèle à un plan de référence contenant le câble principal, et positionnée relativement au boîtier d'interconnexion de telle manière à ce qu'une portion de fibre optique de longueur égale à un rayon de courbure minimal de ladite fibre optique mesurée à partir de la seconde extrémité soit au moins partiellement positionnée à l'extérieur du boîtier d'interconnexion.

Cette caractéristique permet avantageusement de réduire les dimensions du boîtier d'interconnexion.

Selon une autre caractéristique de l'invention, l'épissure est positionnée sensiblement tangente à un cercle de diamètre supérieur au diamètre de courbure minimal de la fibre optique placé au centre du boîtier d'interconnexion.

Selon une autre caractéristique de l'invention, le boîtier d'interconnexion comporte au moins un premier logement d'accueil, apte à accueillir une épissure, et profilé de manière à immobiliser ladite épissure.

Selon une autre caractéristique de l'invention, ledit premier logement d'accueil est apte à recevoir au moins deux épissures superposées selon une direction perpendiculaire au plan de référence.

Selon une autre caractéristique de l'invention, le boîtier d'interconnexion comporte au moins quatre premiers logements d'accueil régulièrement espacés angulairement autour du centre du boîtier d'interconnexion.

Selon une autre caractéristique de l'invention, le boîtier d'interconnexion comporte un second logement d'accueil, apte à accueillir le câble principal, de telle manière à ce que ce dernier passe sensiblement par le centre du boîtier d'interconnexion.

Selon une autre caractéristique de l'invention, ledit second logement d'accueil est encore tel que le câble principal soit courbé.

Selon une autre caractéristique de l'invention, le boîtier d'interconnexion comprend, en son centre, un évidement circulaire ou annulaire de diamètre supérieur à un diamètre de courbure minimal de la fibre optique.

Selon une autre caractéristique de l'invention, ledit évidement est apte à recevoir au moins un enroulement d'une fibre optique reliant le câble principal et une épissure, ledit enroulement comportant au moins un tour de diamètre supérieur au diamètre de courbure minimal de la fibre optique.

Selon une autre caractéristique de l'invention, le boîtier d'interconnexion, comporte une paroi de séparation intermédiaire, sensiblement plane selon le plan de référence, apte à séparer le câble principal dudit enroulement.

Selon une autre caractéristique de l'invention, ladite paroi de séparation est encore apte, par serrage contre une paroi externe du boîtier d'interconnexion, à immobiliser ledit câble principal.

Selon une autre caractéristique de l'invention, le boîtier d'interconnexion comporte un passage, sensiblement circulaire, centré sur le centre du boîtier d'interconnexion, de rayon supérieur à la distance d'une épissure au centre du boîtier d'interconnexion et de profondeur sensiblement égale à la profondeur du boîtier d'interconnexion, apte à accueillir au moins une fibre optique.

Selon une autre caractéristique de l'invention, le contour extérieur du boîtier d'interconnexion présente, dans le plan de référence, une forme circulaire.

Selon une autre caractéristique de l'invention, le contour extérieur du boîtier d'interconnexion présente, dans le plan de référence, une forme rectangulaire, le câble principal étant disposé sensiblement parallèle au grand côté.

D'autres caractéristiques, détails et avantages de l'invention ressortiront plus clairement de la description détaillée donnée ci-après à titre indicatif en relation avec des dessins sur lesquels :
- la figure 1, déjà décrite, montre une cassette selon l'art antérieur,
- la figure 2, présente une vue d'ensemble de face d'un boîtier d'interconnexion selon l'invention, câblé et placé dans un boîtier encastré,
- la figure 3, présente une vue de face d'un même boîtier d'interconnexion,

- la figure 4, présente une vue de face d'un boîtier d'interconnexion nu,
- la figure 5, présente une vue en perspective d'un boîtier d'interconnexion nu,
- la figure 6, présente une vue en perspective d'un même boîtier équipé d'une paroi de séparation intermédiaire,
- la figure 7, présente une vue en perspective d'un boîtier d'interconnexion câblé.

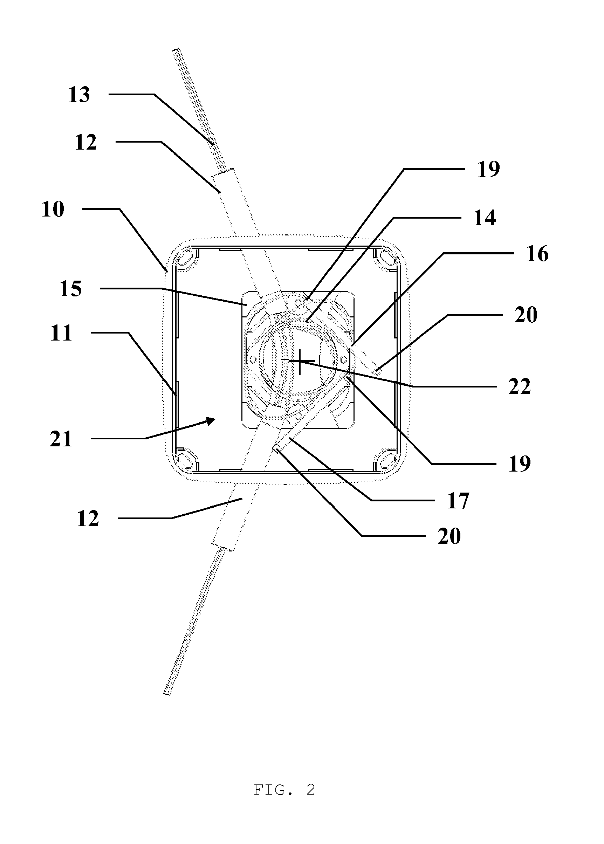

Selon la figure 2, un boîtier encastré 10 est figuré avec son couvercle retiré pour plus de visibilité. Il comporte sur sa périphérie huit ouvertures latérales 11 disponibles pour placer jusqu'à huit gaines annelées (non représentées) par lesquelles arrivent et/ou repartent le câble principal 12 et les câbles secondaires (non représentés). Le boîtier encastré 10 accueille un boîtier d'interconnexion 15. Ce dernier peut aussi comprendre un couvercle supérieur, ici retiré pour plus de visibilité.

Le câble principal 12 achemine, regroupe et protège une première pluralité 13 de fibres optiques 14. Le câble principal 12 arrive d'un concentrateur, ici par le haut de la figure, et pénètre successivement dans le boîtier encastré 10, puis dans le boîtier d'interconnexion 15. A l'intérieur du boîtier d'interconnexion 15 le câble principal 12 est dénudé pour laisser accessibles les fibres optiques 14 de la première pluralité 13. Certaines de ces fibres optiques 14, ici deux, s'arrêtent dans le boîtier d'interconnexion 15 au niveau duquel elle sont câblées, chacune au moyen d'une épissure 16, 17, à une fibre optique appartenant à une seconde pluralité, ladite fibre optique étant individuellement protégée par un câble secondaire. Les fibres optiques, le cas échéant restantes, poursuivent leur chemin et sortent successivement du boîtier d'interconnexion 15, puis du boîtier encastré 10, via le câble principal 12, ici par le bas de la figure, à destination, par exemple, d'un autre boîtier encastré 10.

Une épissure 16, 17 est une portion allongée nécessairement rectiligne permettant de relier par fusion deux fibres optiques auxquelles elle est alignée. Une épissure est recouverte par une protection d'épissure 16, 17, sensiblement cylindrique. La protection d'épissure permet de protéger l'épissure et lui ajoute typiquement une armature rigide. Dans la présente description le terme épissure et protection d'épissure sont indifféremment utilisés pour désigner la partie rectiligne allongée assurant la jonction de deux fibres optiques. Les deux fibres optiques sont ainsi raboutées face à face. L'épissure 16, 17, présente deux extrémités 19, 20. La première extrémité 19 accueille une première fibre optique 14 nue issue du câble principal 12. La seconde extrémité 20 accueille une seconde fibre optique munie de son câble secondaire (non représenté).

Cette caractéristique est importante pour l'invention. Ainsi si la première fibre optique 14 nue, uniquement protégée par une simple gaine fine de 900 microns de diamètre, présente à la première extrémité 19 de l'épissure 16, 17 est très fragile, tant lorsque soumise à un écrasement, que lorsqu'un rayon de courbure minimal n'est pas respecté, doit impérativement être protégée en restant logée à l'intérieur du boîtier d'interconnexion 15, la seconde fibre optique, présente à la seconde extrémité 20 de l'épissure 16, 17, protégée par un câble secondaire, qui assure sa protection tant à l'écrasement que vis-à-vis du respect du rayon de courbure minimum, ne nécessite pas autant de précaution. Cette constatation importante est à l'origine de l'invention en ce qu'elle autorise la réalisation d'un boîtier d'interconnexion 15 tel qu'il n'englobe pas nécessairement sous sa protection en totalité une portion de la fibre optique située à la seconde extrémité 20 de l'épissure 16, 17. Ainsi une portion de ladite fibre optique de longueur égale à un rayon de courbure minimal de ladite fibre optique mesurée à partir de la seconde extrémité 20 de l'épissure 16, 17, qui dans les réalisation de l'art antérieur est entièrement logée à l'intérieur du boîtier ou de la cassette peut être laissée à l'extérieur du boîtier d'interconnexion 15. La où l'art antérieur ne propose qu'un boîtier de dimension au moins égale à un premier rayon de courbure minimal de la fibre optique 14 en entrée, ajouté à une longueur d'une épissure 16, 17 et à un second rayon de courbure de la fibre optique en sortie, il est possible, selon l'invention, de réduire ladite dimension d'au moins une partie de ladite portion de fibre optique en sortie, soit d'une longueur pouvant être égale au rayon de courbure minimal. Ceci est obtenu en disposant la seconde extrémité 20 de l'épissure 16, 17 relativement au contour externe du boîtier d'interconnexion 15, de manière à ce que ladite portion de fibre optique soit au moins en partie située à l'extérieur du boîtier d'interconnexion 15.

De plus, en remarquant que la protection d'épissure 16, 17, assure elle aussi une protection de la fibre optique, suffisante pour ne pas nécessiter la protection par le boîtier d'interconnexion 15, il est encore possible de réduire la dimension du boîtier en positionnant l'épissure 16, 17, de manière à ce que la deuxième extrémité 20 soit à l'extérieur dudit contour externe du boîtier d'interconnexion 15, en débordement.

Ceci permet avantageusement de réduire de manière importante les dimensions du boîtier d'interconnexion 15 par rapport aux dimensions d'une cassette selon l'art antérieur. L'espace interstitiel 21 entre le boîtier d'interconnexion 15 et le boîtier encastré 10 peut être mis à profit pour diriger le ou les câbles secondaires issus des épissures 16, 17, vers les ouvertures 11 et les gaines annelées correspondantes.

Selon un mode de réalisation avantageux l'épissure 16, 17 est disposée dans le boîtier d'interconnexion 15 sensiblement coplanaire au câble principal 12, ou du moins dans un plan parallèle à un plan de référence contenant le câble principal 12. La direction de ce plan de référence se confond avec le plan de la figure 2.

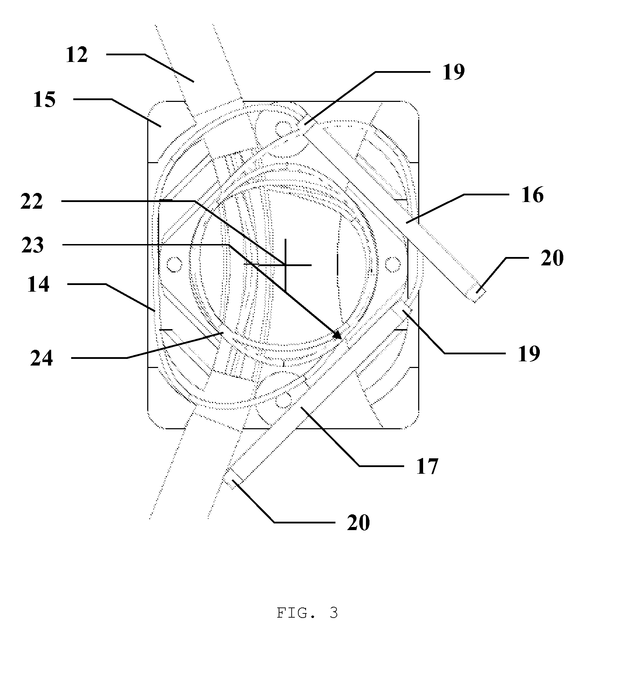

En se référant maintenant à la vue détaillée à la figure 3, selon une disposition particulièrement avantageuse pour réduire les dimensions du boîtier d'interconnexion 15, l'épissure 16, 17 est positionnée sensiblement tangente à un cercle 23 de diamètre légèrement supérieur au diamètre de courbure minimal de la fibre optique 14 le centre dudit cercle 23 étant placé au centre 22 du boîtier d'interconnexion 15. En effet, la fibre optique 14, à sa sortie du câble principal 12, s'enroule en respectant une contrainte de rayon de courbure minimale, soit selon un diamètre au moins égal au diamètre de courbure minimal de la fibre optique. En supposant que l'on construit le boîtier d'interconnexion en plaçant son centre 22 en coïncidence avec le centre dudit enroulement 24, sa dimension est d'autant plus réduite que l'épissure 16, 17 est disposée au plus prêt dudit centre 22. Cependant afin de respecter la contrainte de rayon de courbure, l'épissure 16, 17, sur la première extrémité 19 de laquelle aboutit tangentiellement la fibre optique 14, doit être éloignée dudit centre 22 d'au moins le rayon minimal de courbure. Il convient de plus de laisser un espace afin de permettre la mise en place dudit enroulement 24 de fibre optique.

Il convient encore, malgré la réduction dimensionnelle obtenue grâce au positionnement de la portion de fibre optique attenante à la seconde extrémité 20 à l'extérieur du boîtier d'interconnexion 15, de limiter l'occupation hors tout de l'ensemble du dispositif d'interconnexion, épissures 16, 17 comprises. On note, comme le montre la figure 3, que cette contrainte conduit à disposer sensiblement la première extrémité 19 de l'épissure 16, 17 de telle manière à ce qu'une perpendiculaire à l'épissure 16, 17, abaissée depuis la première extrémité 19, soit tangente audit cercle de diamètre de courbure minimal. Ceci conduit à un débordement maximum profitable de l'épissure 16, 17 hors du contour externe du boîtier d'interconnexion 15, réduit à la longueur de l'épissure 16, 17, otée du diamètre de courbure minimal. Soit 40 - 30 = 10 mm de débordement en reprenant les valeurs illustratives utilisées précédemment. Ainsi si la longueur de l'épissure est inférieure ou égale au diamètre de courbure minimal, aucun débordement utile ne peut être obtenu. L'invention est cependant applicable en ce qu'une réduction dimensionnelle, pouvant atteindre la valeur du rayon de courbure minimal, peut toujours être obtenue, en relation avec la portion de fibre optique en sortie de la seconde extrémité 20.

Les figures 2 à 7 détaillent un mode de réalisation du boîtier d'interconnexion 15. Il convient d'immobiliser les épissures 16, 17 dans le boîtier d'interconnexion 15. Pour cela le boîtier d'interconnexion 15 comporte au moins un logement d'accueil 25, apte à accueillir une épissure 16, 17, en dégageant les extrémités 19, 20 afin de permettre le passage des fibres optiques 14. Un tel logement d'accueil 25 peut être réalisé au moyen d'un U de largeur sensiblement égale à l'épaisseur d'une protection d'épissure 16, 17. L'épaisseur indicative d'une épissure 16, 17 est typiquement égale à 2,3mm. La longueur dudit logement est avantageusement inférieure à la longueur de l'épissure 16, 17. L'épissure peut être maintenue dans le logement 25 par collage. Cependant, le logement peut avantageusement être profilé afin d'immobiliser l'épissure 16, 17 après sa mise en place dans le logement 25. Un tel profilage peut consister en une forme complémentaire de la forme de la section de l'épissure 16, 17, réalisée dans le profil en U, afin de réaliser un clipsage de l'épissure 16, 17 dans le logement 25.

Le boîtier d'interconnexion 15 est réalisé en matière plastique ce qui permet une légère élasticité du logement 25 compte tenu de sa forme.

Le profilage peut encore consister en un U droit, mais de largeur légèrement inférieure à l'épaisseur de la protection d'épissure 16, 17. L'épissure 16, 17 est alors mise en place en force dans le logement 25, ce qui assure son maintien en place.

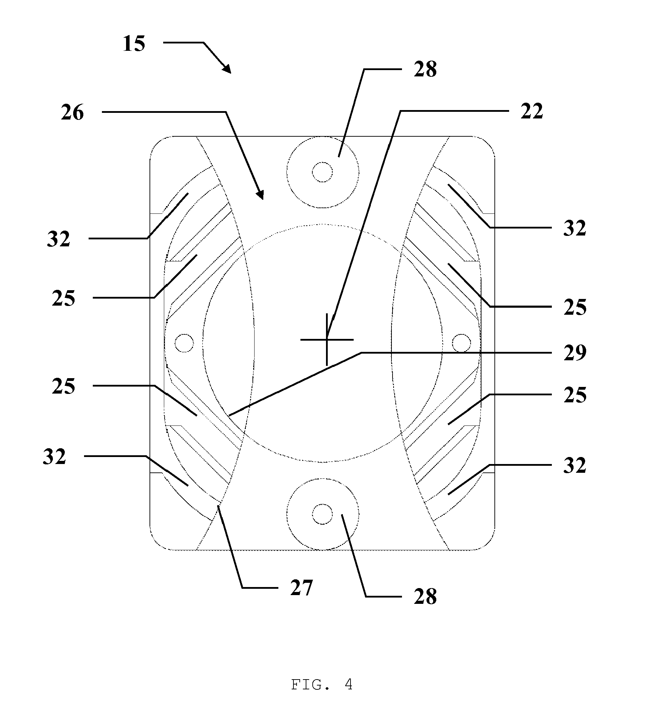

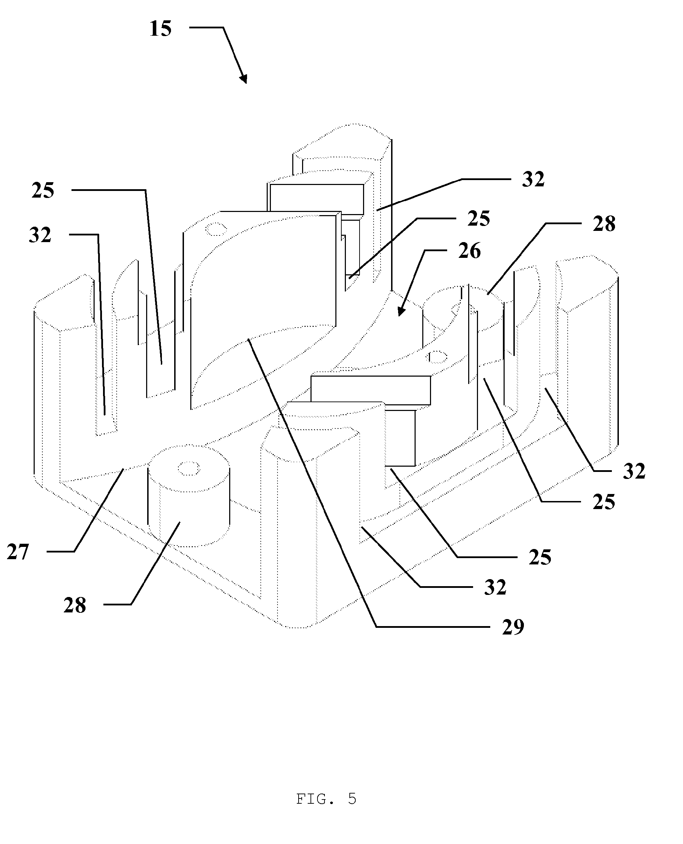

Le boîtier d'interconnexion 15 est conçu selon une logique sensiblement plane. Cependant il peut présenter une certaine épaisseur et autoriser des passages de fibres optiques 14 et des câblages selon plusieurs plans superposés. Selon un mode de réalisation avantageux, un premier logement d'accueil 25 présente une profondeur apte à recevoir au moins deux épissures 16, 17, superposées selon une direction perpendiculaire au plan de la figure 4. Ainsi tel qu'apparent à la figure 5, un logement d'accueil 25 présente une hauteur égale à deux fois le diamètre d'une épissure 16, 17, afin d'accueillir deux épissures l'une sur l'autre. Si l'épaisseur du boîtier 15 le permet il est ainsi possible de réaliser un logement d'accueil 25 apte à recevoir trois épissures, ou même davantage. Il est à noter que chaque épissure 16, 17 peut être placée indifféremment dans un sens ou dans l'autre, dans le logement d'accueil 25. Dans le cas de plusieurs épissures 16, 17, superposées, ces épissures peuvent être dans le même sens ou tête-bêche, selon toutes les combinaisons possibles. Cette possibilité offre une richesse de configuration des câblages afin d'orienter une épissure 16, 17 au plus près en direction, de son câble secondaire, de l'ouverture 11 et de la gaine annelée correspondante. Afin d'éviter des croisements de fibre optique 14 ou de câbles secondaire pouvant conduire à un conflit préjudiciable, certaines configurations sont à éviter. Ainsi on préférera une mise en place où les épissures 16, 17 situées dans un même plan de superposition sont orientées dans un même sens. Ainsi, avec plusieurs plans superposés, un plan peut être dédié à des épissures 16, 17 orientées dans un sens horaire, tandis qu'un autre plan peut être dédié à des épissures 16, 17 orientées dans un sens anti-horaire. Le nombre de superpositions possibles est adapté en fonction du nombre de possibilités de sortie de câble secondaire souhaitées pour le boîtier d'interconnexion 15.

Compte tenu de la disposition tangentielle des logements d'accueil 25 autour du centre 22 du boîtier d'interconnexion 15, il est possible de disposer plusieurs logements d'accueil 25 autour dudit centre 22. Ces logements d'accueil 25 sont avantageusement régulièrement espacés angulairement autour du centre 22 du boîtier d'interconnexion 15. Compte tenu de la longueur d'une épissure 16, 17, relativement au diamètre du cercle central 23 d'enroulement, il est possible de placer quatre épissures et donc quatre logements d'accueil 25.

Selon le mode de réalisation présenté, comprenant quatre logements d'accueil 25 pouvant accueillir chacun deux épissures 16, 17 superposées, le boîtier d'interconnexion 15 permet d'accueillir jusqu'à huit épissures 16, 17, offrant ainsi un nombre très grand de configurations.

Le boîtier d'interconnexion 15 est destiné à accueillir un câble principal 12. Ce dernier est le plus souvent traversant, à l'exception du cas particulier de fin de ligne de distribution. Le boîtier d'interconnexion 15 comporte à cet effet un second logement d'accueil 26, traversant, apte à accueillir le câble principal 12. Selon un mode de réalisation avantageux, ce logement d'accueil 26 est conformé de telle manière à ce que le câble principal 12 passe au plus près du centre 22 du boîtier d'interconnexion 15. Le câble principal 12 est ainsi disposé sensiblement radialement relativement au cercle d'enroulement 23. Ceci à pour effet que les fibres optiques 14, lorsqu'elles sortent du câble principal 12 afin de venir s'enrouler autour du cercle d'enroulement 23, autour du centre 22, peuvent sortir des deux côtés et cependant respecter le rayon minimal de courbure. Ainsi une fibre optique 14, arrivant du haut comme sur les figures, peut sortir vers la droite pour s'enrouler en sens horaire ou vers la gauche pour s'enrouler en sens anti-horaire. Ces deux sens permettent d'atteindre des épissures 16, 17, disposées dans un sens ou dans l'autre, relativement à leur logements d'accueil 25, et contribuent ainsi à augmenter le nombre des possibilités de câblage.

Le câble principal 12 peut ainsi traverser le boîtier d'interconnexion 15 de manière rectiligne selon un axe diamétral. Cet axe peut être oblique vers la gauche ou vers la droite en présence des plots 28, le câble principal passant entre les deux plots 28. Une configuration verticale selon le grand axe du boîtier d'interconnexion 15 est encore possible en l'absence de plot 28.

Il peut encore selon un mode de réalisation préférentiel être légèrement plié ou courbé, tout en passant par le centre 22. Ceci est par exemple obtenu dans la réalisation illustrative figurée par une forme courbe 27 servant d'appui au câble principal 12 en coopération avec des plots 28. Selon la figure 2, 3 ou 7, le câble principal 12 est ainsi coudé afin de présenter sa courbure vers la gauche de la figure lorsqu'il est placé à gauche des deux plots 28. Selon une configuration alternative, le câble principal 12, peut encore être coudé afin de présenter sa courbure vers la droite lorsqu'il est placé à droite des deux plots 28, en appui contre une forme courbe symétrique de la forme courbe 27.

Ainsi la partie entrante et la partie sortante du câble principal 12 restent toutes deux sensiblement radiales au cercle 23 avec les avantages précités. De plus une telle configuration du câble principal 12 présente l'avantage, le câble principal 12 étant dénudé dans sa partie centrale incluse à l'intérieur du boîtier d'interconnexion 15, de courber le faisceau de fibre optiques 14 de la première pluralité 13. Ceci a pour effet de faciliter l'extraction hors dudit faisceau d'une fibre optique 14 destinée à être câblée sur une épissure 16, 17. De manière secondaire, une telle disposition permet aussi de dégager l'axe central du boîtier au niveau des plots 28. Ceci permet d'y loger au moins un trou de fixation du boîtier d'interconnexion ou encore au moins un plot 28 dont une autre fonction est décrite plus loin.

Le boîtier d'interconnexion 15 comprend encore, en son centre 22, un évidement circulaire ou annulaire 29, afin de permettre un enroulement 24 de la ou des fibres optiques 14 nues entre le câble principal 12 et la ou les épissures 16, 17. Compte tenu de la contrainte de rayon de courbure minimal, cet évidement 29 présente un diamètre supérieur au diamètre de courbure minimal de la fibre optique, d'au moins l'épaisseur de l'enroulement 24. Compte tenu du diamètre typique de 900 microns de la fibre optique nue 14, ladite épaisseur, même en présence d'un nombre de tours importants, reste réduite. Ledit évidement 29 peut présenter une partie circulaire convexe afin de maintenir par l'extérieur l'enroulement 24 des fibres optiques. Cette partie circulaire extérieure peut présenter une circonférence complète ou partielle comme sur l'exemple figuré. Des ouvertures sont cependant pratiquées, le cas échéant dans un autre plan, afin de permettre l'entrée et la sortie des fibres optiques 14 avant et après leur enroulement 24. Dans le mode de réalisation illustratif, deux ouvertures diamétralement opposées, en haut et en bas du boîtier d'interconnexion 15, sont réalisées à cet effet sur toute la hauteur dudit boîtier 15. L'évidement 29 peut encore être annulaire et présenter un noyau central concave de diamètre égal au diamètre de courbure minimal de la fibre optique afin de servir de guide intérieur d'enroulement, tout en garantissant que l'enroulement 24 ne puisse pas présenter un diamètre inférieur. Ce noyau peut présenter une circonférence complète ou partielle, telle que par exemple une série de pions comprenant au moins deux éléments disposés sur ledit diamètre intérieur. Aucun noyau n'est représenté sur les figures.

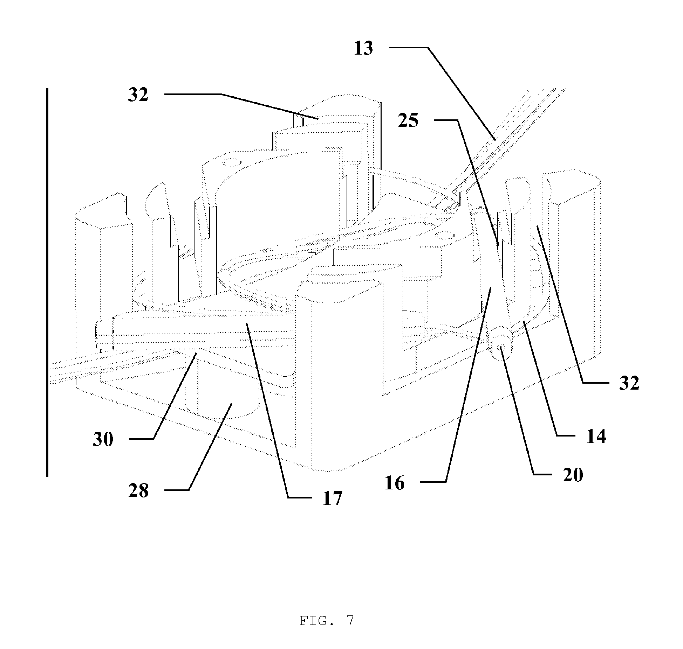

Comme illustré aux figures 2 ou 7 ledit évidement 29 sert à recevoir au moins un enroulement 24 d'une fibre optique 14 dans sa partie où elle est nue et relie le câble principal 12 et une épissure 16, 17. Ledit évidement 29 est dimensionné afin d'accueillir un nombre d'enroulements 24 correspondant au nombre d'épissures 16, 17 possibles. Une marge est prévue afin de pouvoir enrouler au moins un tour de chacune des fibres optiques 14 selon un diamètre supérieur au diamètre de courbure minimal. Une telle réserve de longueur de fibre optique 14, enroulée au milieu du boîtier d'interconnexion 15, est avantageuse en ce qu'elle permet de faciliter la mise en place de l'outillage de réalisation d'épissure entre les deux portions de fibre optiques respectivement issues du câble principal 12 et d'un câble secondaire. Cette réserve de longueur est encore appréciable aussi afin de provisionner un inévitable raccourcissement occasionné par une possible reprise de câblage.

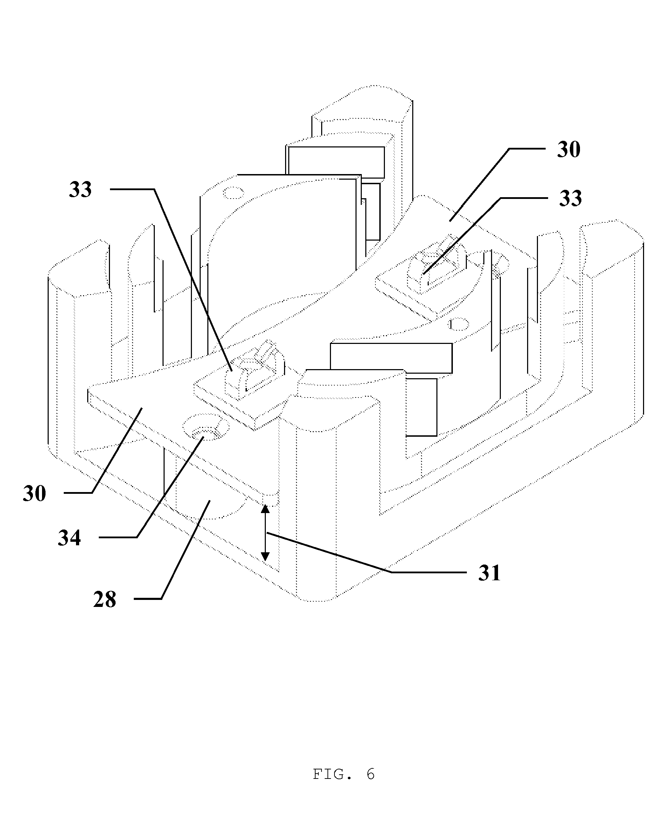

Selon un mode de réalisation avantageux, le boîtier d'interconnexion 15 comprend une paroi de séparation intermédiaire 30. Cette paroi de séparation 30 est particulièrement visible à la figure 6. Elle est sensiblement plane et disposée parallèle au plan de référence et telle qu'elle sépare d'un côté le câble principal 12 et de l'autre le ou les enroulements 24 de fibre optique. Cette paroi de séparation 30 permet de protéger les fibres optiques 14 de la première pluralité 13 traversant le boîtier d'interconnexion 15 dans la partie où elles ne sont plus protégées par le câble principal 12, ce dernier étant ici dénudé. Cette paroi de séparation 30 permet encore de supporter les enroulements 24 de fibres optiques 14 à destination des épissures 16, 17. Elle peut être munie d'au moins un passe fil 33 permettant d'immobiliser les spires desdits enroulements 24.

Selon un mode de réalisation avantageux, ladite paroi de séparation 30 permet encore, par serrage contre une des parois externes du boîtier d'interconnexion 15, d'immobiliser ledit câble principal 12. Ceci est avantageux en ce que ledit câble principal 12 est dénudé dans cette partie et donc fragilisé vis-à-vis des efforts de traction. Un serrage est par exemple obtenu dans le mode de réalisation illustré par vissage ou clipsage de la paroi de séparation 30 sur les plots 28, le câble principal 12 étant logé entre la paroi de séparation 30 et le fond du boîtier d'interconnexion 15. Un serrage adéquat est obtenu en réalisant une côte de hauteur 31, par exemple en dimensionnant la hauteur des plots 28 servant ici d'entretoises, légèrement inférieure au diamètre du câble principal 12.

Selon un mode de réalisation avantageux, le boîtier d'interconnexion 15 comporte encore au moins un passage 32, particulièrement visible à la figure 5. Ce passage 32 sensiblement circulaire, est centré sur le centre 22 du boîtier d'interconnexion 15, et présente un rayon supérieur à la distance d'une épissure 16, 17 au centre 22 du boîtier d'interconnexion 15. Ainsi ledit passage 32 est placé à l'extérieur desdites épissures 16, 17. Plusieurs passages 32 concentriques sont possibles, au détriment cependant de la réduction de taille du boîtier d'interconnexion 15. Ce passage 32 présente avantageusement une profondeur la plus grande possible jusqu'à être égale à la profondeur du boîtier d'interconnexion 15. Un tel passage est apte à accueillir au moins une fibre optique 14. Ce passage peut être reproduit sur toute la périphérie du boîtier d'interconnexion 15, soit quatre fois sur la réalisation illustrative. Un tel passage 32 permet, comme particulièrement illustré à la figure 7, le passage d'une fibre optique 14, principalement entre l'enroulement central 24 et une épissure 16, 17. La grande profondeur de ce passage 32 permet de réaliser des configurations de câblage en changeant de plan afin par exemple de réaliser des croisements de fibre optiques 14, en fonction des positions, angulaires et en hauteur, et des sens respectifs des épissures 16, 17.

La forme extérieure du contour du boîtier d'interconnexion 15 peut être quelconque. Cependant, comme il a été vu précédemment, le boîtier d'interconnexion est construit autour d'un centre 22 et d'un cercle d'enroulement 23 central et présente une symétrie centrale. Selon un mode de réalisation le boîtier d'interconnexion 15 présente un contour extérieur, dans le plan de référence, de forme circulaire.

Selon un autre mode de réalisation, et compte tenu de la disposition de quatre épissures 16, 17, angulairement réparties, le boîtier d'interconnexion 15 peut présenter une forme carrée. Une dimension de 52 x 52 mm est ainsi réalisable.

Selon un autre mode de réalisation, afin de supporter le câble principal 12 selon sa direction axiale, le contour extérieur présente, dans le plan commun, une forme rectangulaire, étirée selon l'axe du câble principal 12, ce dernier étant disposé sensiblement parallèle au grand côté.

Le boîtier d'interconnexion 15 illustratif représenté sur les différentes figures présente des dimensions de 43 x 52 mm, parfaitement intégrable dans un boîtier encastré de 85 x 85 mm.

## Revendications

1. Boîtier d'interconnexion pour fibre optique apte à accueillir au moins une épissure (16, 17), rectiligne et allongée, comportant une première extrémité (19) solidaire et alignée avec une première fibre optique (14) issue d'une première pluralité (13) de fibres optiques, regroupées et protégées par un câble principal (12) via lequel ladite première fibre optique (14) entre dans ledit boîtier d'interconnexion (15) et une seconde extrémité (20) solidaire et alignée avec une seconde fibre optique issue d'une seconde pluralité de fibres optiques individuellement protégées chacune par un câble secondaire via lequel ladite seconde fibre optique sort dudit boîtier d'interconnexion (15),
***caractérisé en ce que*** ladite épissure (16, 17) est disposée dans un plan parallèle à un plan de référence contenant le câble principal (12), et positionnée relativement au boîtier d'interconnexion (15) de telle manière à ce qu'une portion de fibre optique de longueur égale à un rayon de courbure minimal de ladite fibre optique mesurée à partir de la seconde extrémité (20) soit au moins partiellement positionnée à l'extérieur du boîtier d'interconnexion (15).

2. Boîtier d'interconnexion selon la revendication **1,** où l'épissure (16, 17) est positionnée sensiblement tangente à un cercle (23) de diamètre supérieur au diamètre de courbure minimal de la fibre optique placé au centre (22) du boîtier d'interconnexion (15).

3. Boîtier d'interconnexion selon la revendication **1** ou **2,** comportant au moins un premier logement d'accueil (25), apte à accueillir une épissure (16, 17), et profilé de manière à immobiliser ladite épissure (16, 17).

4. Boîtier d'interconnexion selon la revendication **3,** où ledit premier logement d'accueil (25) est apte à recevoir au moins deux épissures (16, 17) superposées selon une direction perpendiculaire au plan de référence.

5. Boîtier d'interconnexion selon la revendication **3** ou **4,** comportant au moins quatre premiers logements d'accueil (25) régulièrement espacés angulairement autour du centre (22) du boîtier d'interconnexion (15).

6. Boîtier d'interconnexion selon l'une quelconque des revendications **1** à **5,** comportant un second logement d'accueil (26), apte à accueillir le câble principal (26), de telle manière à ce que ce dernier passe sensiblement par le centre (22) du boîtier d'interconnexion (15).

7. Boîtier d'interconnexion selon la revendication **6,** où ledit second logement d'accueil (26) est encore tel que le câble principal (12) soit courbé.

8. Boîtier d'interconnexion selon l'une quelconque des revendications **1** à **7,** comprenant, en son centre (22), un évidement (29) circulaire ou annulaire de diamètre supérieur à un diamètre de courbure minimal de la fibre optique.

9. Boîtier d'interconnexion selon la revendication **8,** où ledit évidement (29) est apte à recevoir au moins un enroulement (24) d'une fibre optique (14) reliant le câble principal (12) et une épissure (16, 17), ledit enroulement (24) comportant au moins un tour de diamètre supérieur au diamètre de courbure minimal de la fibre optique.

10. Boîtier d'interconnexion selon la revendication **9,** comportant une paroi de séparation intermédiaire (30), sensiblement plane selon le plan de référence, apte à séparer le câble principal (12) dudit enroulement (24).

11. Boîtier d'interconnexion selon la revendication **10,** où ladite paroi de séparation intermédiaire (30) est encore apte, par serrage contre une paroi externe du boîtier d'interconnexion (15), à immobiliser ledit câble principal (12).

12. Boîtier d'interconnexion selon l'une quelconque des revendications **1** à **11,** comportant un passage (32), sensiblement circulaire, centré sur le centre (22) du boîtier d'interconnexion (15), de rayon supérieur à la distance d'une épissure (16, 17) au centre (22) du boîtier d'interconnexion (15) et de profondeur sensiblement égale à la profondeur du boîtier d'interconnexion (15), apte à accueillir au moins une fibre optique (14).

13. Boîtier d'interconnexion selon l'une quelconque des revendications **1** à **12,** dont le contour extérieur présente, dans le plan de référence, une forme circulaire.

14. Boîtier d'interconnexion selon l'une quelconque des revendications **1** à **12,** dont le contour extérieur présente, dans le plan de référence, une forme rectangulaire, le câble principal (12) étant disposé sensiblement parallèle au grand côté.
